# EUROPEAN PATENT APPLICATION

(11) **EP 1 491 506 A1**
(43) Date of publication of application: **29.12.2004**
(21) Application number: 03253795.3
(22) Date of filing: 16.06.2003
(51) Int. Cl.: C02F 1/44

(54) **Improved membrane distillation method**

(71) Applicant: Kuo, Joseph, Taichung City (TW); Chang, Chen-Chang, Chia-Yi City, Taiwan (TW)
(72) Inventor: Kuo, Joseph, Taichung City (TW); Chang, Chen-Chang, Chia-Yi City, Taiwan (TW)
(74) Representative: Paget, Hugh Charles Edward

(57) **Abstract**

A membrane distillation method includes the steps of preparing a membrane distillation module (70) that includes a hydrophobic porous membrane (73) which is permeable to gas or vapor and impermeable to the solution, and injecting a body of the solution into the membrane distillation module (70) and forming nano-grade gas bubbles of inert gas in the solution in the membrane distillation module (70) in such a manner that the solution is emulsified with the nano-grade gas bubbles and that the thus formed nano-grade gas bubbles are allowed to pass through the membrane (73) from one side to the other side of the membrane (73).

## Description

This invention relates to an improved membrane distillation method for treating an aqueous solution, more particularly to an improved membrane distillation method for reclaiming de-mineralized water from saline water. Saline water include sea water, brackish water, well water, surface water, saline ground water, salted rice wine, waste waters resulting from industrial or residential water use system and the like.

U.S. Patent No. 3,340,186 discloses a method, which has been referred to as membrane distillation, for reclaiming de-mineralized water from saline water using a porous hydrophobic membrane that is not wetted by water. The membrane separates a body of saline water from a body of de-mineralized water, which has a lower temperature and thus a vapor pressure less than that of the body of saline water, and is formed with a larger number of gas-filled micro pores therein for passage of vapor there through. In operation, a portion of saline water evaporates within the micro pores along the water and membrane interface. The vapor then passes through the membrane via diffusion and is condensed on the other side of membrane in the body of de-mineralized water.

The conventional membrane distillation method is a thermal-driven process. It has disadvantages as follows: (1) the saline solution evaporates on one side of the membrane at entrances of micro pores, fouling can be easily occurred, an effective pretreatment equipment is thus required; (2) effective diffusion mass transfer governed by gas-liquid equilibrium in the traditional membrane distillation basically rely on maintaining a greater degree of temperature difference on both side of the membrane, which requires relatively large consumption of thermal energy; (3) since the concentration of saline water considerably increases near the interface due to evaporation of water, concentration polarization, i.e., the concentration of saline water becomes relatively high such that the evaporation rate of water becomes relatively slow; (4) water clogging, the intrusion of water into the pores of the membrane, is very likely to occur, which may block the pores or may intercommunicate the body of the saline water and the de-mineralized water, thereby contaminating the body of de-mineralized water; and (5) since evaporation of water occurs only at areas near the interface where the pores are formed, the amount of the thus formed vapor is too small.

For mass production using the conventional distillation method requires a large amount of.energy and equipment, and is not economically feasible to be commercialized.

It would be desirable to be able to provide an improved membrane distillation method for reclaiming de-mineralized water from saline water that is capable of overcoming the aforementioned drawbacks of the prior art.

According to this invention, there is provided an improved membrane distillation method for treating an aqueous solution. The method comprises the steps of: preparing a membrane distillation module that includes a hydrophobic porous membrane which is permeable to gas or vapor and impermeable to the solution; and injecting a body of the solution into the membrane distillation module and forming nano-grade gas bubbles of inert gas in the solution in the membrane distillation module in such a manner that the solution is emulsified with the nano-grade gas bubbles and that the thus formed nano-grade gas bubbles are allowed to pass through the membrane from one side to the other side of the membrane.

In drawings which illustrate an embodiment of the invention,
Fig. 1 is a schematic flow diagram of a preferred embodiment of an improved membrane distillation method for reclaiming de-mineralized water from saline water according to this invention; and
Fig. 2 is a schematic view to illustrate how an amount of vapor passes from a saline water compartment through a porous hydrophobic membrane and into a de-mineralized water compartment of a membrane distillation device according to this invention.

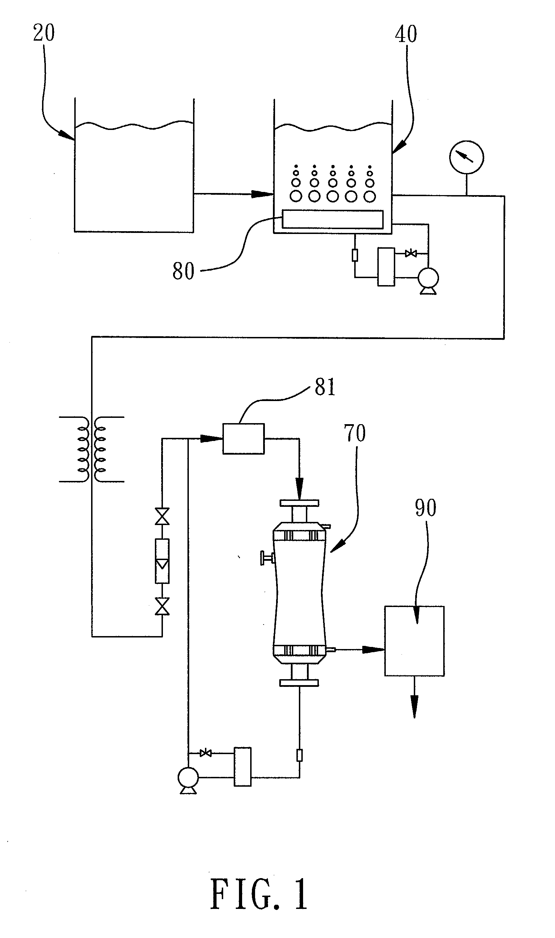

Fig.1 illustrates a preferred embodiment of an improved membrane distillation method reclaiming de-mineralized water from saline water according to this invention.

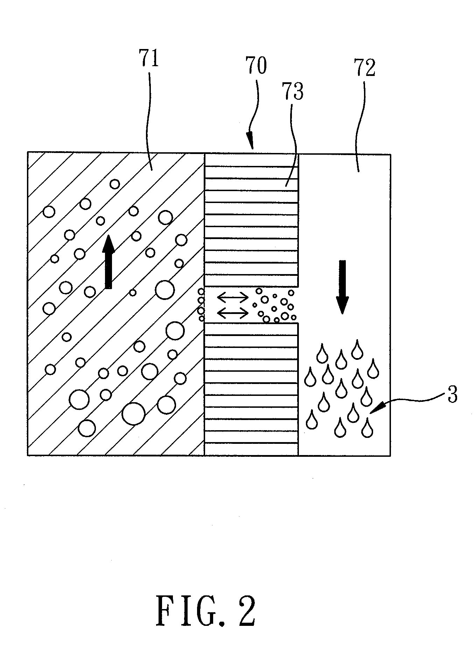

The method includes the steps of: preparing a body of saline water in a storage tank 20; delivering the body of saline water into a pretreatment container 40; injecting a high pressure of an inert gas, such as air, into the body of saline water in the pretreatment container 40 and forming nano-grade gas bubbles of inert gas in the body of saline water using a bubble generator 80 so as to remove suspended solids or dissolved gases such as CO₂ and NH₃ from the body of saline water in the pretreatment container 40; heating the pretreated body of saline water; preparing a membrane distillation module 70 including a saline water compartment 71 and a de-mineralized water compartment 72 (see Fig. 2) that is separated from the saline water compartment 71 by a hydrophobic porous membrane 73 which is permeable to gas or vapor and impermeable to liquid water; feeding the pretreated body of saline water into the saline water compartment 71 under a working pressure ranging from 5 to 100 psig; reforming nano-grade gas bubbles in the pretreated body of saline water in the saline water compartment 71 to emulsify the pretreated body of saline water using a second bubble generator 81 and to cause the bubbles to pass through the hydrophobic porous membrane 73 and into the de-mineralized compartment 72, the emulsified body of saline water passing through the surface of the membrane 73 in a turbulent flowing manner, which can effectively reduce the mass transfer resistance, and which permits the emulsified solution to sweep out the foulants or contaminants deposited on the surface of the membrane 73 . Each of the nano-grade gas bubbles carries an amount of saturated vapor vaporized from the working body of saline water. A condenser 90 is used to cool the vapor delivered from the de-mineralized water compartment 72 so as to obtain condensate of de-mineralized water.

The inner gas is preferably preheated prior to injection into the body of saline water in the membrane distillation module 70.

The volume ratio of the gas bubbles to the body of saline water in the bubble formed container 81 is preferably in a range of from 1:10 to 1:2, and is more preferably from 1:6 to 1:5.

The hydrophobic porous membrane 73 is preferably made from fluorocarbons, such as poly-tetra-fluoro-ethylene (PTFE), and preferably has a mean pore diameter ranging from 0.01 to 0.5 micron. The nano-grade gas bubbles have a diameter less than or nearly equal to the mean pore diameter of the hydrophobic porous membrane 73.

The body of saline water is preferably heated, and is preferably controlled at a temperature ranging from 10 to 60°C. The de-mineralized water compartment 72 is controlled at a temperature less than that of the body of saline water in the saline water compartment 71 so as to permit condensation of vapor to enter into the de-mineralized water compartment 72.

Since the working body of saline water is emulsified with nano-grade gas bubbles, which are in contact with the porous hydrophobic membrane 73, the aforesaid drawbacks as encountered in the prior art can be eliminated. Moreover, each of the nano-grade gas bubbles contains substantially saturated vapor therein and the gas-enriched emulsified solution forms a turbulent flow in the membrane distillation module 70, thereby significantly increasing the vapor flux through the membrane 73. The shear force of the emulsified solution is capable of sweeping away the foulants deposited on the surface of the membrane 73 to reduce the tendency of fouling.

The amount of vapor produced at the interface of water/pore is quite minimal because the time required for water/vapor system to reach equilibrium to obtain saturated vapor is quite long. The emulsified water formed according to the method of this invention contains large amount of bubbles, which is somewhat similar to boiling water. As a consequence, the mass transfer between two opposite sides of the hydrophobic distillation membrane 73 is changed from stagnant liquid-gas diffusion control, which is described by Arnold theory, to gas-gas convective control, which means the mass transfer rate will be dramatically increased. Massive vapor passing through the hydrophobic distillation membrane 73 according to the method of this invention can be obtained.

## Claims

1. A membrane distillation method for treating an aqueous solution, **characterised by** the steps of:
preparing a membrane distillation module (70) that includes a hydrophobic porous membrane (73) which is permeable to gas or vapor and impermeable to the solution; and
injecting a body of the solution into the membrane distillation module (70) and forming nano-grade gas bubbles of inert gas in the solution in the membrane distillation module (70) in such a manner that the solution is emulsified with the nano-grade gas bubbles and that the thud formed nano-grade gas bubbles are allowed to pass through the membrane (73) from one side to the other side of the membrane (73).

2. The method of claim 1, further **characterised by** removing suspended solids by forming nano-grade gas bubbles of inert gas in the solution in a pre-treatment container (4) prior to delivering of the solution into the membrane distillation module (70).

3. The method of claim 1 or claim 2, **characterised in that** the volume ratio of the nano-grade gas bubbles to the solution is in a range of from 1:10 to 1:2.

4. The method of claim 3, **characterised in that** the volume ratio of the nano-grade gas bubbles to the solution is in a range of from 1:6 to 1:5.

5. The method of any one of claims 1 to 4, **characterised in that** the nano-grade gas bubbles have a diameter less than the mean pore diameter of the hydrophobic porous membrane (73).

6. The method of any one of claims 1 to 5 **characterised in that** said body of saline water is controlled at a temperature ranging from 10 to 60°C.
